(19) Europäisches Patentamt

European Patent Office

Office européen des brevets

(11) Publication number: **0 202 092 B1**

## EUROPEAN PATENT SPECIFICATION

(45) Date of publication of patent specification: **12.08.92**   (51) Int. Cl.5: **G02F 1/133**

(21) Application number: **86303579.6**

(22) Date of filing: **12.05.86**

(54) Liquid crystal display device.

(30) Priority: **15.05.85 JP 103141/85**

(43) Date of publication of application:
**20.11.86 Bulletin 86/47**

(45) Publication of the grant of the patent:
**12.08.92 Bulletin 92/33**

(84) Designated Contracting States:
**CH DE FR GB IT LI SE**

(56) References cited:
**EP-A- 0 122 659**
**EP-A- 0 174 431**
**US-A- 4 223 308**

**J. APPL. PHYS., vol. 54, no. 10, October 1983, pages 5801-5827, American Institute of Physics; D.J. DiMARIA et al.: "Charge transport and trapping phenomena in off-stoichiometric silicon dioxide films**

**J. APPL. PHYS., vol. 51, no. 5, May 1980, pages 2722-2735, American Institute of Physics; D.J. DiMARIA et al.: "High current injection into SiO2 from Si rich SiO2 films and experimental applications"**

**APPLIED PHYSICS LETTERS, vol. 46, no. 9,**

**May 1985, pages 879-881, American Institute of Physics, New York, US; M. MIYAKE et al.: "Conductive layer formation by high-dose Si ion implantation into SiO2"**

(73) Proprietor: **SEIKO INSTRUMENTS INC.**
**31-1, Kameido 6-chome Koto-ku**
**Tokyo 136(JP)**

(72) Inventor: **Suzuki, Mitsuya**
**c/o Seiko Instruments & Electronics Ltd.**
**6-31-1, Kameido Koto-ku Tokyo(JP)**

(74) Representative: **Miller, Joseph et al**
**J. MILLER & CO. 34 Bedford Row, Holborn**
**London WC1R 4JH(GB)**

# Description

This invention relates generally to liquid crystal display devices, for example, for use as display panels of measuring instruments, instrument panels of motor vehicles, personal computer image displays, television receivers, and so forth.

Liquid crystal display devices have many practical applications and are compact, lightweight and consume relatively little power. One type of liquid crystal display device is an active matrix liquid crystal display device which uses thin film transistors having three terminals or MOS transistors formed on a single crystal silicon layer. Another type of active matrix liquid crystal display device uses non-linear resistance elements having two terminals and connected in series with each liquid crystal pixel. Both these types of liquid crystal display device have attracted attention in recent years because they enable an increased amount of information to be displayed.

In comparison with the active matrix liquid crystal display devices having 3-terminal transistors, those having 2-terminal resistance elements have a smaller number of films to be formed and a smaller number of photoetching steps need to be conducted during manufacture and only need relatively rough patterning accuracy. These liquid crystal display devices are, therefore, of low cost and have a relatively large display area.

The following systems are known for active matrix liquid crystal display devices having 2-terminal resistance elements:

(1) varistor system
(2) metal-insulating film-metal (MIM) system
(3) diode system.

The varistor system (1) and the MIM system (2) are disclosed in published Japanese Patent Application No. 105285/1980 and published Japanese Patent Application No. 161273/1980, respectively. The operating system of such active matrix liquid crystal display devices will be described with reference to the MIM system by way of example.

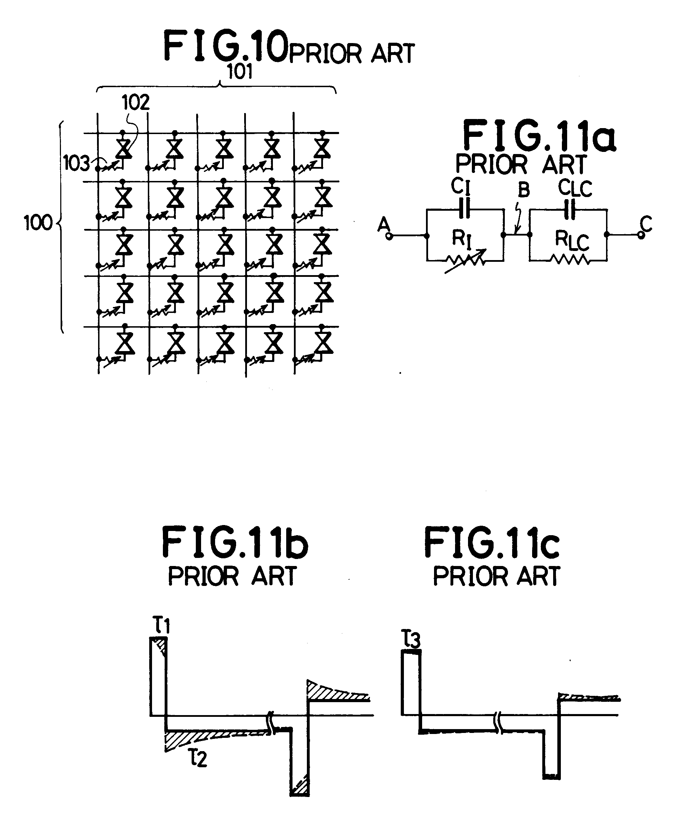

Figure 9 is a longitudinal sectional view of a known liquid crystal display device using the MIM type non-linear resistance elements of the MIM system (2). Figure 9 illustrates only one pixel. Figure 10 is a circuit diagram of a liquid crystal display device having a large number of row and column electrodes using pixels of the type shown in Figure 9.

Referring specifically to Figure 9, the liquid crystal display device has upper and lower transparent substrates 90,91, a liquid crystal layer 92, a transparent display electrode 93 on the upper substrate and a metallic tantalum electrode 94 on the lower substrate.

The transparent electrode 93 and the tantalum electrode 94 together form row and column electrodes of which there are more than 100 electrode groups. Reference numeral 95 represents a display pixel electrode and reference numeral 96 is an insulating film formed by anodic oxidation of the metallic tantalum electrode 94. The MIM non-linear resistance element consists of the electrode 94, the insulating film 96 and the electrode 95.

Figure 10 is an equivalent circuit diagram of the liquid crystal display device shown in Figure 9. Reference numeral 100 represents the row electrode groups and reference numeral 101 represents the column electrode groups. Liquid crystal material 102 and a non-linear resistance element 103 that are connected in series are formed at the point of intersection of each row electrode and each column electrode.

The principle of operation of the liquid crystal display device shown in Figures 9 and 10 is as follows. Using an ordinary simple matrix drive method a large number of row electrodes 100 shown in Figure 10 are selected line by line from the upper line, and data is written using the column electrodes 101 during a selection period. The voltage levels to be applied to the row and column electrodes are determined by a system which is generally referred to as a "voltage averaging method". This also holds true of a liquid crystal display device having non-linear resistance elements as shown in Figure 10, and a bias ratio from 1/3 to 1/15 is employed.

Figure 11a is an equivalent circuit diagram of one pixel of the liquid crystal display device of Figure 9, and a non-linear resistance element and a liquid crystal material are shown connected in series with one another. Symbol $C_{LC}$ represents the capacitance of the liquid crystal material, $R_{LC}$ is its resistance, $C_I$ is the capacitance of the non-linear resistance element and $R_I$ represents its resistance. The resistance $R_I$ is a function of voltage. Figures 11b and 11c show the waveforms of voltages applied to the pixel when it is turned-on and turned-off. The solid line represents the waveform of the voltage impressed upon the pixel, and this voltage is applied in practice between the point A and the point C in Figure 11a. The broken line represents the waveform of the voltage at the point B in Figure 11a. Therefore, the hatched portions in Figures 11b and 11c represent the effective voltage applied to the liquid crystal material.

In order to operate the liquid crystal display device with sufficient contrast, the effective voltage applied to the liquid crystal material at the time of turn-on must be greater than the saturation voltage $V_{SAT}$ of the liquid crystal material, the effective voltage applied to the liquid crystal material at the time of turn-off must be lower than the threshold voltage $V_{TH}$ of the liquid crystal material and, at the same time, the value of the resistance $R_I$ in the non-selection period is at least equal to the value of the resistance of the liquid crystal material. In other words, the time constant $\tau_1$ for writing at the time of turn-on, the time constant $\tau_2$ for holding electric charge and the time constant $\tau_3$ for inhibiting writing can be expressed by the following equations (1) to (3). Here, the capacitance of the liquid crystal material is assumed to be $5 \times 10^{-13}$F.

$$5 \times 10^{-6} < \tau_1 < 1 \times 10^{-4} \qquad (1)$$
$$1.6 \times 10^{-3} < \tau_2 \qquad (2)$$
$$\tau_3 > 1 \times 10^{-4} \qquad (3)$$

where

$\tau_1 = R_I(V_{ON})C_{LC}$ ($V_{ON}$: turn-on voltage)
$\tau_2 = R_I(V_{NON})R_{LC}C_{LC}/[R_I(V_{NON}) + R_{LC}]$ ($V_{NON}$: voltage during non-selection period)
$\tau_3 = R_I(V_{OFF})C_{LC}$ ($V_{OFF}$: turn-off voltage)

therefore,

$$10^7 < R_I(V_{ON}) < 2 \times 10^8 \qquad (4)$$
$$3 \times 10^9 < R_I(V_{NON})R_{LC}/[R_I(V_{NON}) + R_{LC}] \qquad (5)$$
$$R_I(V_{OFF}) > 2 \times 10^8 \qquad (6)$$

Generally, the relation $C_I < C_{LC}/5$ must be satisfied in order to apply a sufficient voltage to the non-linear resistance element with $C_I$ representing the capacity of the non-linear resistance element.

In the conventional MIM system using an insulating film for the non-linear resistance element, the insulating film 96 shown in Figure 9 must be from 10 to 60 nm thick.

From this restrictive condition of the capacitance ratio $C_I \leq C_{LC}/5$ between the non-linear resistance element and the liquid crystal material, the overlap area of the non-linear resistance element with the electrodes 93,94 must be at most about 6 microns $\times$ 6 microns, and the density of a current flowing through this portion is at least 5A/cm² from equation 4.

In a liquid crystal display device of this kind where the insulating film 96 is from 10 to 60 nm thick, the non-linear resistance element is likely to be damaged by mechanical loads that are imposed by liquid crystal orientation rubbing treatment. If the materials of the upper and lower substrates constituting the non-linear resistance element are different, non-linearity of the voltage-current characteristics becomes asymmetric with respect to the positive and negative polarity of the impressed voltage due to the difference of the potential barrier between the respective electrodes and the insulating film, so that the liquid crystal display device undergoes rapid degradation if an electro-chemical reaction develops at the interface between the liquid crystal material and the electrodes. In order to prevent this problem, electrodes made of the same material must be used, so that the number of photoetching steps increases, at least four photomasks need to be used and, as a result, the production costs of the liquid crystal display devices of this type rises.

This also holds true of a liquid crystal display device using diodes as the non-linear resistance elements. If varistors using zinc oxide (ZnO) are used, the ZnO must be at least 25 $\mu$m thick and the sintering temperature during their production process must be at least 500°C. In addition, etching of an extremely thick film is necessary, and the driving voltage must be at least 30V.

The problems of the prior art liquid crystal display devices described above can be summarised as follows:

Miniature etching step below 6 $\mu$m exists, and production of a display device having a size of greater than A4 becomes difficult.

The number of photoetching steps is at least 3, and the ratio of occurrence of defects increases. In addition, production costs increase due to increase in the number of production steps.

Since the insulating layer used is below 60 nm thick, the non-linear resistance element is likely to be damaged during liquid crystal orientation rubbing treatment.

The metal electrodes constituting the MIM device must have an electrically symmetrical structure, and to this end, the same metal must be used for all the electrodes and hence the number of production steps increases.

When diodes are used as the non-linear resistance elements, at least two diodes must be disposed either in parallel or in series for each pixel in order to obtain the same voltage-current characteristics in both forward and reverse directions. Therefore, the number of production steps and the ratio of occurrence of defects increases.

Varistors using ZnO require a relatively thick film and a high sintering temperature. Therefore, it becomes difficult to make the substrate surface flat and again the number of production steps increases.

According to the present invention there is provided a liquid crystal display device comprising: two opposed substrates; a layer of liquid crystal material between said substrates; a plurality of row electrodes formed on the inner surface of one of said substrates; a plurality of column electrodes formed on the inner surface of the other of said substrates; a plurality of pixel electrodes and a non-linear resistive layer formed on at least one of said substrates, said non-linear resistive layer comprising an amorphous silicon material providing an electrical connection between each pixel electrode and a respective one of the row or column electrodes; characterised in that said amorphous silicon material contains in addition to silicon, in a greater than stoichiometric ratio, a proportion of oxygen or nitrogen or of both oxygen and nitrogen.

Preferably said amorphous material is silicon oxide, silicon nitride or silicon oxide nitride.

Said amorphous material may include hydrogen, phosphorus, or boron.

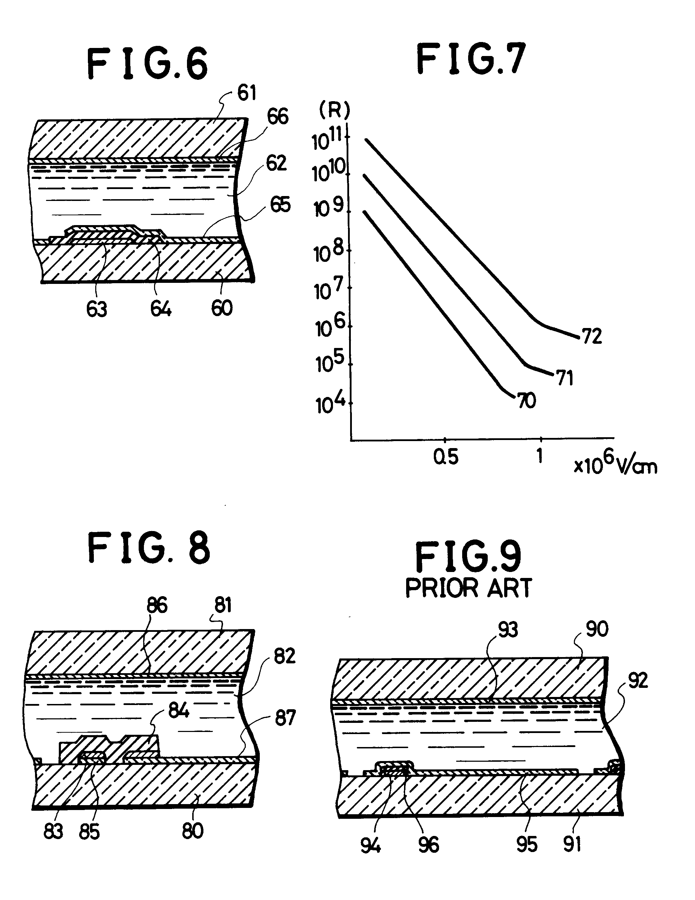

Said amorphous material may be a film which is from 40 nm to 1000 nm thick. In the case of a planar structure where the amorphous material is formed in a horizontal direction between the conductors such as shown in Figure 8, the film thickness may be 1,000 nm.

In one embodiment said first conductor, said second conductor and said amorphous material of each non-linear resistance element are disposed in a plane parallel to the plane of the substrate on which they are formed, the distance between said first and second conductors being at least 1 $\mu$m.

Preferably said second conductor, said amorphous material and said first conductor of each non-linear resistance element are sequentially laminated on said substrate.

It has been confirmed experimentally that if the current-field intensity of a non-linear resistance element is expressed by equation (7), the non-linear coefficient $\alpha$ assumes a value of from about 3 to 20:

$$I = K \, I \times d \, (\alpha E) \qquad (7)$$

where:

I:　　current
K:　　constant
$\alpha$:　　non-linear coefficient
E:　　field intensity 106 V/cm

In other words, with a non-linear resistance element of the type used in the present invention, the overlap area between the conductor - the amorphous material - the conductor can be made to be about 100 $\mu$m$^2$ to 1,000 $\mu$m$^2$. The electric characteristics of the non-linear resistance elements used in the present invention does not depend upon the electrode material, but has extremely excellent symmetry of voltage-current characteristics with respect to the polarity of the voltage impressed upon the electrodes.

The number of etching steps necessary may be two or three, and the minimum patterning width at the time of photoetching may be made to 10 $\mu$m to 40 $\mu$m. Therefore, extremely rough patterning becomes possible. The amorphous material of the non-linear resistance element is basically electro-conductive and is ordinarily at least 100 nm in thickness. Therefore, the non-linear resistance elements are rarely destroyed by rubbing at the time of orientation treatment and have sufficient breakdown voltage to resist static electricity.

As described above, the present invention needs only extremely simple production steps and results in non-linear resistance elements in a rough design rule of at least 10 $\mu$m. Since the scale of the picture surface can easily be increased and a high production yield can be obtained, a liquid crystal display device using these non-linear resistance elements can be obtained.

The invention is illustrated, merely by way of example, in the accompanying drawings, in which:-

Figure 1 is a perspective view showing the electrode structure of one embodiment of a liquid crystal display device according to the present invention;

Figure 1b is a longitudinal sectional view of part of the liquid crystal display device of Figure 1a;

Figure 2 shows the current-voltage characteristics of a non-linear resistance element used in a liquid crystal display device according to the present invention;

Figures 3a and 3b are diagrams showing the infra-red absorption characteristics of a silicon oxide film and silicon nitride film respectively used in a liquid crystal display device according to the present invention;

Figures 4a and 4b are diagrams showing the resistance-field intensity characteristics of a silicon oxide film used in a liquid crystal display device according to the present invention and the dependence on the film properties upon the composition ratio O/Si, respectively;

Figures 5a and 5b are diagrams showing the resistance-field intensity characteristics of the silicon nitride film used in a liquid crystal display device according to the present invention and the dependency of the film properties upon the composition ratio N/Si, respectively;

Figure 6 is a longitudinal sectional view of another embodiment of a liquid crystal display device according to the present invention;

Figure 7 is a diagram showing the resistance-field intensity characteristics when phosphorus is doped into a silicon oxide film used in a liquid crystal display device according to the present invention;

Figure 8 is a longitudinal sectional view of a further embodiment of a liquid crystal display device according to the present invention;

Figure 9 is a longitudinal sectional view of part of a known MIM liquid crystal display device;

Figure 10 is a circuit diagram of the known liquid crystal display device of Figure 9;

Figure 11a is an equivalent circuit diagram of a pixel of the liquid crystal display device of Figure 9; and

Figures 11b and 11c are voltage waveform diagrams at the time of turn-on and turn-off respectively of the pixel of Figure 11a.

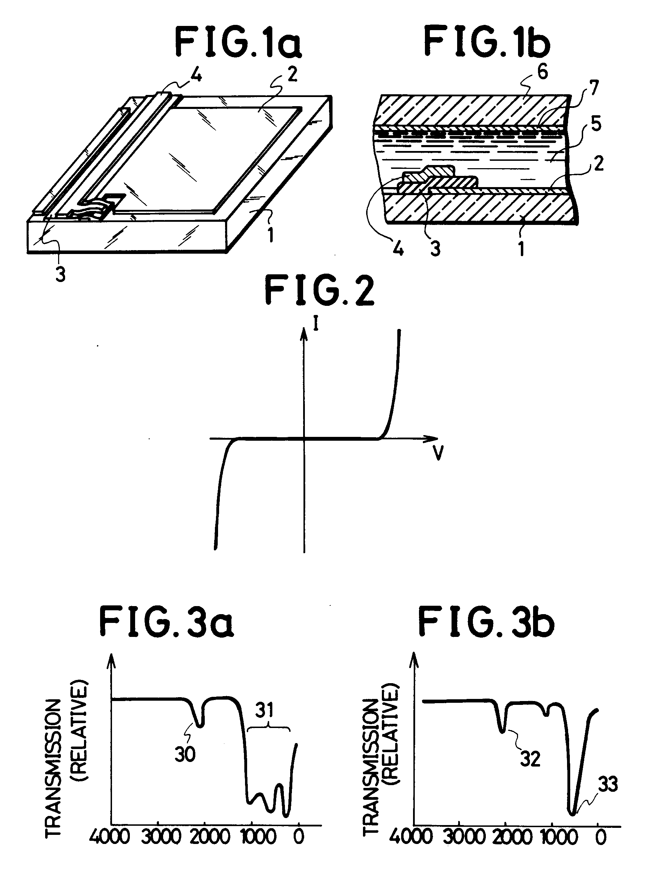

Figure 1a is a perspective view of one embodiment of a liquid crystal display device according to the present invention and in particular of a substrate 1 on which a non-linear resistance element is formed. Figure 1a illustrates only one pixel, and a liquid crystal layer, an opposed substrate and a polariser are omitted for clarity of illustration.

Figure 1b is a longitudinal sectional view of one pixel of the liquid crystal display device of Figure 1a, a polariser being omitted for clarity. The substrate 1 is transparent and ordinary glass may be used. A transparent conductive film 2 which is from about 10 nm to 50 nm thick is formed by magnetron spattering of indium tin oxide. Photoetching is used for patterning the film 2. Amorphous material consisting principally of silicon is used for a film 3. In the case of silicon oxide for the film 3, it is deposited by plasma chemical vapour deposition (CVD) using a gaseous mixture of silane, carbon dioxide (carbonic acid gas), nitrogen suboxide (nitrogen monoxide) and oxygen. In the case of a silicon nitride film, it is formed by plasma CVD using a gaseous mixture of silane, ammonia and nitrogen.

A metal electrode 4 is one of the row and column electrodes. In this embodiment, the metal electrode 4 is formed with a thickness of about 300 nm by sputtering metallic chromium. Instead of chromium, it is possible to use Al, Cu, NiCr, Ag, Au and Ta. The metal electrode 4 is selectively photoetched, and while a photosensitive resin is sill present, the amorphous film 3 consisting principally of silicon is slectively etched. As a result, a non-linear resistance element is produced by the two photomask steps and the three etching steps.

Referring now to Figure 1b, a layer 5, which is about 7 microns thick, is formed of a twisted nematic liquid crystal material. An upper transparent substrate 6 is made of ordinary glass. A transparent conductive film 7 of indium tin oxide is formed on the substrate and is used either as a row electrode or as a column electrode.

Figure 2 shows the current-voltage characteristics of the amorphous film 3 which consists principally of silicon and is formed by the method as described above. The diagram shows the case where one of the electrodes is made of metallic chromium and the other of indium tin oxide. As can be seen, the current-voltage characteristics have excellent symmetry.

Figure 3a is a diagram showing the infra-red absorption characteristics of the amorphous silicon film formed by a plasma CVD method using a gaseous mixture of silane and nitrogen suboxide (monoxide) gas. Reference numeral 30 represents the infra-red absorption peak resulting from the Si-H bond around wave number 2,100 cm$^{-1}$ Reference numeral 31 represents the infra-red absorption peak resulting from the Si-O bond around wave numbers 1050 cm$^{-1}$ and 800 $\sim$ 900 cm$^{-1}$, respectively. As a result of calculation from the absorption peak of the Si-H bond, the hydrogen content of the amorphous silicon film is found to be from $10^{21}$ to $10^{22}$ pcs/cm$^3$.

Figure 3b is a diagram showing the infra-red absorption characteristics of an amorphous material formed by plasma CVD using a gaseous mixture of silane and ammonia or nitrogen. Reference numeral 32 represents the infra-red absorption peak around 2100 cm$^{-1}$ resulting from the Si-H bond, and reference numeral 33 represents a broad absorption peak around 840 cm$^{-1}$ resulting from the Si-N bond. The hydrogen content of the silicon nitride film is found to be in the range of from $10^{21}$ to $10^{22}$ pcs/cm$^3$.

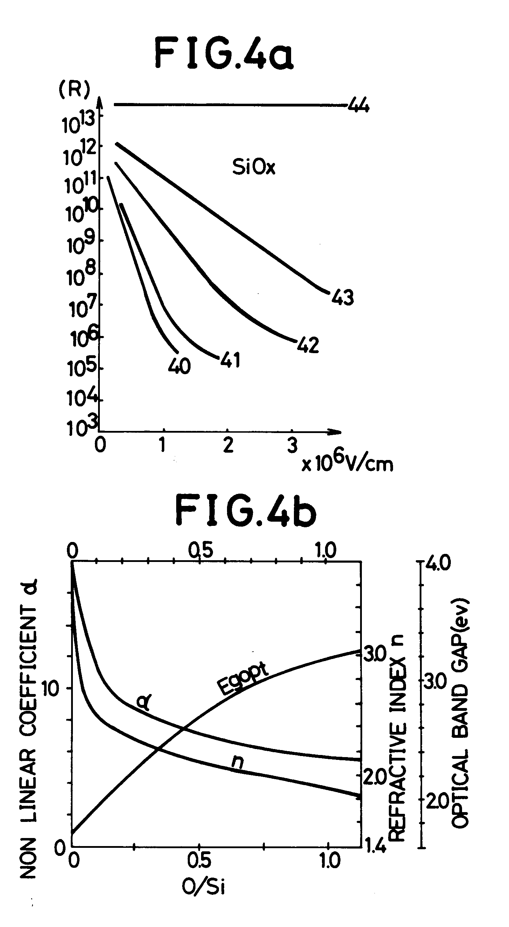

Figures 4a and 4b are diagrams of the characteristics of the non-linear resistance element with variation in the atomic composition ratio [oxygen (O)/silicon (Si)] of a silicon oxide film, which contains a greater quantity of silicon atoms than the stoichiometric ratio and is used in a liquid crystal display device according to the present invention, and showing the change of the non-linear resistance characteristics, respectively. Figure 4a shows the resistance-field intensity characteristics (hereinafter called "R-E characteristics") of the silicon oxide film.

Curve 40 in Figure 4a represents dark current R-E characteristics of amorphous silicon not containing any oxygen atoms. Curves 41, 42 and 43 in Figure 4a represent the R-E characteristics when the ratio O/Si is increased. Curves 42, 43 and 44 represent the R-E characteristics of silicon oxide when the ratio O/Si is 0.17, 0.75 and 2, respectively. The change in the R-E characteristics resulting from the change of the film composition can be obtained also by changing the film thickness of the amorphous film 3. From this fact, it is assumed that the properties of the amorphous film are reflected in the R-E characteristics, and this is unlike the tunnel effect or Schottky effect.

Figure 4b is a diagram showing the properties of a silicon oxide film containing a greater ratio of silicon atoms than the stoichiometric ratio. The abscissa represents the ratio O/Si and the ordinate represents the non-linear coefficient $\alpha$ expressed by equation (7), refractive index n and an optical band gap Eg$_{opt}$ Figure 4b shows results obtained by experiments. When the optical band gap Eg$_{opt}$ is at least 2.5 eV, the silicon oxide film becomes substantially transparent and the ratio O/Si is from 0.4 to 0.5. The non-linear coefficient $\alpha$ is at least 7.

Next, the method of using the non-linear resistance material for a liquid crystal display device according to the present invention will be explained. The resistance $R_I$ of the non-linear resistance element must satisfy the conditions expressed by equations (4) to (6). Namely, a voltage $V_{ON}$ is applied at turn-on of the display and the value $R_I$ at this time is from $10^7$ to $10^8$ ohms. When the maximum voltage at turn-off $V_{OFF}$ is applied, the value $R_I$ is at least $10^8$ ohms. Furthermore, the voltage $V_{NON}$ is applied during the non-selection period and the value $R_I$ at this time may be equal to the resistance $R_{LC}$ of the layer of the liquid crystal material. The power source voltage is set to be 20 V because the current consumed can be reduced and matching with other devices becomes more suitable when the liquid crystal driving voltage is as low as possible. Therefore, in the case of the non-linear resistance characteristics represented by the curve 43 in Figure 4a, the field intensity is from 3 to 4 $\times$ $10^6$ V/cm and the value $R_I$ is $10^7$ ohms.

In other words, if a value of $R_I$ of $10^7$ ohms is to be obtained, a silicon oxide film having a greater silicon content than the stoichiometric ratio may be 50 nm in thickness. In the case of the non-linear characteristics represented by the curve 41, on the other hand, the value $R_I$ at the field intensity of 1 $\times$ $10^6$ V/cm is $10^7$ ohms. Therefore, the silicon oxide film may be about 200 nm in thickness to give a value of $R_I$ of $10^7$ ohms.

Next, when the liquid crystal display device is driven by a 1/10 bias method determined by the afore-mentioned voltage averaging method, the maximum voltage $V_{OFF}$ at turn-off of the display applied between the row electrode and the columnelectrode is 16 V. At this time, all the $R_I$ values of the non-linear resistance element represented by curves 40-43 are greater than $10^8$ ohms, and when $V_{NON}$ is 4 V, all the $R_I$ values of the non-linear resistance element are at least ohms. Therefore, the liquid crystal display device can be driven by this method.

In this embodiment of the present invention, the atomic composition ratio O/Si is 0.1 and the non-linear resistance element represented by the curve 41 in Figure 4a is used.

A liquid crystal display device having 400 row and column electrodes (duty ratio = 1/400), is driven by the 1/10 bias method using a driving voltage of 15 to 20 V. At this time, the contrast ratio of the display surface is at least 10:1.

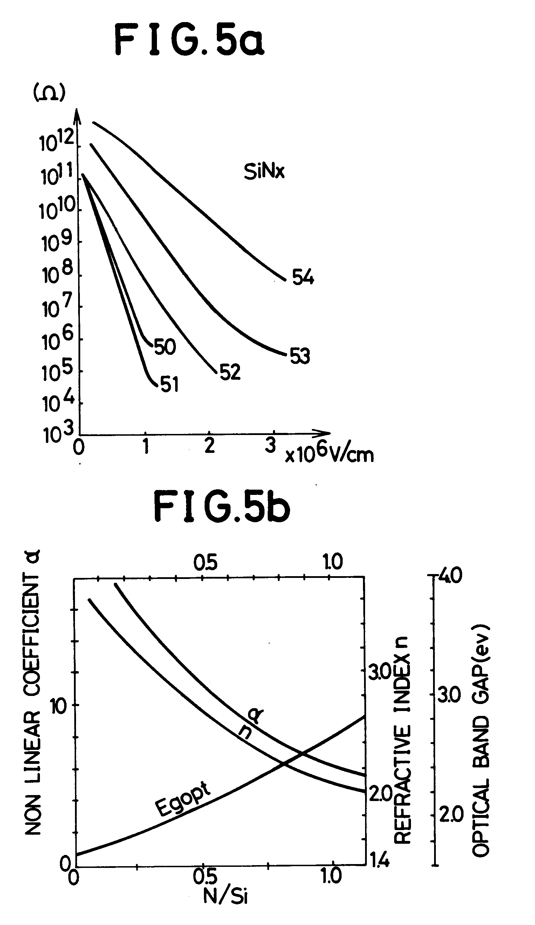

Figures 5a and 5b show the characteristics of a non-linear resistance film with variation in the atomic composition ratio [nitrogen (N)/silicon (Si)] of a silicon nitride film, which is used for a liquid crystal display device according to the present invention and which contains a greater quantity of silicon atoms than the stoichiometric ratio, and showing the change of the non-linear resistance characteristics with the properties of the film.

Figure 5a is a diagram showing the R-E characteristics when the ratio N/Si is changed. Curve 50 in Figure 5a represents the R-E characteristics of amorphous silicon not containing nitrogen, and curves 51, 52, 53, 54 represent the R-E characteristics when the ratio N/Si is smaller than 0.3, 0.4, 0.8 and greater than 1.0, respectively.

In Figure 5b, the abscissa represents the N/Si ratio of the silicon nitride film and the ordinate represents the non-linear coefficient $\alpha$, refractive index n and the optical band gap $Eg_{opt}$ When the silicon nitride film contains a greater quantity of silicon than the stoichiometric ratio, the same result can be obtained in the same way as in the case of the afore-mentioned silicon oxide film. Incidentally, curve 51 in Figure 5a represents the R-E characteristics of amorphous silicon containing a trace amount of nitrogen. A display panel using an amorphous material which is from 500 to 1,000 nm thick can be driven sufficiently under the driving conditions referred to above in connection with the silicon oxide film.

Next, the electrode width of the non-linear resistance element used for the liquid crystal display device will be described.

The specific dielectric constant of the amorphous material consisting principally of silicon is from about 5 to about 7. As a condition necessary for applying a sufficient voltage to the non-linear resistance element, the capacitance $C_I$ must be reduced sufficiently with respect to the capacitance $C_{LC}$ of the liquid crystal material, and generally must satisfy the relation $C_{LC} \geq 5C_I$ However, the resistance $R_I$ of the non-linear resistance element is scarcely relevant. When the dielectric constant of the liquid crystal material is 10 and the area of each pixel is 300 microns by 300 microns, the capacitance $C_I$ must be set to be at least 0.1 pF because the capacitance $C_{LC}$ of one pixel has the relation $CLC \sim 0.5$ pF. Suppose the amorphous film is 100 nm thick, the overlap area of the electrodes 2,4 shown in Figure 1b is 226 $\mu m^2$ and the line width of the electrode at the overlap portion of the two electrodes is about 15 microns. If the amorphous film is 500 nm, the overlap area of the electrodes 2, 4 is about 1,100 $\mu m^2$ and the line width of electrode at the overlap portion of the electrodes can be made to be greater than 30 $\mu m$. Since the line width of the electrode used in the MIM system is about 6 $\mu m$, the electrodes used in the present invention can be produced by extremely rough patterning. In Figure 1b the electrode width at the overlap portion of the two electrodes is from 10 to 15 $\mu m$.

Figure 6 is a longitudinal sectional view showing a part of another embodiment of a liquid crystal display device according to the present invention.

Upper and lower substrates 60,61 consist of glass. The liquid crystal display device has a liquid crystal layer 62, a metal electrode 63, a transparent pixel electrode 65 consisting of indium tin oxide, an amorphous film 64 consisting of silicon as its principal component, and a transparent electrode 66 opposite to the electrode 63.

In comparison with the embodiment shown in Figures 1a and 1b, in this embodiment, the electrode construction of the non-linear resistance element is reversed, but the operation and the driving condition are the same as those of the previously described embodiment.

Figure 7 shows the R-E characteristics of an amorphous film which consists of silicon as its principal component, into which phosphorous (P) is doped and which is used in a liquid crystal display device according to the present invention. The resistance of the P-doped silicon oxide film, which is formed by a plasma CVD method using a gaseous mixture of silane and nitrogen suboxide (monoxide) containing 0.1% to 1% of phosphine drops remarkably in comparison with the resistance of a silicon oxide film. Curves 70,71 in Figure 7 show the R-E characteristics of silicon oxide films in which 1% and 0.1% of phosphine is added to the silane gas, and curve 72 represents the R-E characteristics of a silicon dioxide film not doped with phosphorous.

Figure 8 is a longitudinal sectional view showing a part of a further embodiment of a liquid crystal display device according to the present invention using the P-doped amorphous silicon oxide film described above. The liquid crystal display device has a lower transparent substrate 80 and an upper transparent substrate 81, both made of glass. A chromium electrode 83 and a transparent electrode 85 of indium tin oxide together form a two-layered or laminated electrode. The electrode portion is continously formed by sputtering, and a pixel portion 87 and the electrodes 83,85 are separated by photoetching.

Next, a 1 to 5 micron thick P-doped silicon oxide film 84 having a large silicon content is formed on the substrate by plasma CVD. After the silicon oxide film is selectively removed by etching, the chromium film 83 of the pixel electrode is continuously removed. The non-linear resistance element consists of the electrodes 83,85, the pixel electrode 87 and the P-doped silicon oxide film 84 interposed between them. The non-linear resistance element is formed with a width of about 300 $\mu$m in the longitudinal direction of the row or column electrode. A liquid crystal display device having 200 row and column electrodes formed in this manner is driven by a 1/10 bias (voltage averaging) method using a driving voltage of 20 to 50 V. In this case, a uniform display free from any irregularity can be obtained and the contrast ratio is at least 10:1.

Phosphorus is doped into the silicon oxide film with silicon as the principal component in the liquid crystal display device of Figures 7 and 8, and the same result can be obtained by doping phosphorous into a silicon nitride film having a greater silicon content than the stoichiometric ratio and consisting of silicon as the principal component. Moreover, the same result can be obtained with a boron-doped amorphous film prepared using diborane.

In the embodiments described above, the amorphous silicon, the silicon oxide film and the silicon nitride film have been illustrated as examples of amorphous films consisting principally of silicon. A good result can also be obtained with other amorphous films such as a silicon nitride oxide film consisting principally of silicon. In the foregoing embodiments, the amorphous material consisting principally of silicon is produced by a plasma CVD method, but it can be produced in the same way by CVD at normal or reduced pressure, sputtering using hydrogen gas, optical CVD and so forth.

As described above, a liquid crystal display device according to the present invention uses non-linear resistance elements consisting of amorphous material with silicon as its principal component, e.g. silicon oxide or silicon nitride having a greater silicon content than the stoichiometric ratio. The non-linear coefficient $\alpha$ expressed by equation (7) is from 3 to 20, and the overlap area between two electrodes forming part of the non-linear element can be made to be from 100 $\mu$m$^2$ to 1,000 $\mu$m$^2$.

Accordingly, the electrodes can be formed with a minimum pattern width of from 10 $\mu$m to 40 $\mu$m. A display surface greater than A4 size can be formed easily by extremely rough patterning. The amorphous film is generally at least 100 nm thick, so the non-linear resistance element is unlikely to be damaged by liquid crystal orientation rubbing treatment, and at the same time has an extremely high break-down voltage to static electricity. The number of production steps for a substrate carrying the non-linear resistance elements is extremely small, and the number of masks used for the photoetching step is from 2 to 3. The registration accuracy of the pattern and the mask can be made to be ±20 $\mu$m.

As discussed above, the present invention enables the production of large scale liquid crystal display devices easily and at reduced cost but with a high production yield.

## Claims

1. A liquid crystal display device comprising: two opposed substrates (1,6; 60,61; 80,81); a layer (5; 62; 82) of liquid crystal material between said substrates; a plurality of row electrodes (4; 63; 83,85) formed on the inner surface of one of said substrates (1; 60; 80); a plurality of column electrodes (7; 66; 86) formed on the inner surface of the other of said substrates (6; 61; 81); a plurality of pixel electrodes (2; 65; 87) and a non-linear resistive layer (3; 64; 84) formed on at least one of said substrates (1,6; 60,61; 80,81), said non-linear resistive layer (3; 64; 84) comprising an amorphous silicon material providing an electrical connection between each pixel electrode and a respective one of the row or column electrodes; characterised in that said amorphous silicon material contains in addition to silicon, in a greater than stoichiometric ratio, a proportion of oxygen or nitrogen or of both oxygen and nitrogen.

2.   A liquid crystal display device as claimed in claim 1, characterised in that said amorphous material is silicon oxide, silicon nitride or silicon oxide nitride.

3.   A liquid crystal display device as claimed in claim 1 or 2, characterised in that said amorphous material includes hydrogen.

4.   A liquid crystal display device as claimed in any preceding claim, characterised in that said amorphous material includes phosphorus or boron.

5.   A liquid crystal display device as claimed in any preceding claim, characterised in that said non-linear resistive layer is a film which is from 40 nm to 1000 nm thick.

6.   A liquid crystal display device as claimed in any preceding claim, characterised in that said non-linear resistive layer is formed by means of plasma chemical vapour deposition, low pressure chemical vapour deposition, normal pressure chemical vapour deposition, optical chemical vapour deposition or sputtering.

7.   A liquid crystal display device as claimed in any preceding claim, characterised in that each said pixel electrode, each said respective electrode and said non-linear resistive layer, are disposed in a plane parallel to the plane of the associated substrate.

**Revendications**

1.   Un dispositif de visualisation à cristal liquide comprenant : deux substrats opposés (1, 6; 60, 61; 80, 81); une couche (5; 62; 82) d'une matière à cristal liquide intercalée entre les substrats; un ensemble d'électrodes de ligne (4; 63; 83, 85) formées sur la surface intérieure de l'un des substrats (1; 60; 80); un ensemble d'électrodes de colonne (7; 66; 86) formées sur la surface intérieure de l'autre substrat (6; 61; 81); un ensemble d'électrodes de pixel (2; 65; 87) et une couche résistive non linéaire (3; 64; 84) formée sur l'un au moins des substrats (1, 6; 60, 61; 80, 81), cette couche résistive non linéaire (3; 64; 84) consistant en un matériau amorphe contenant du silicium qui établit une connexion électrique entre chaque électrode de pixel et l'une correspondante des électrodes de ligne ou de colonne; caractérisé en ce que le matériau amorphe contenant du silicium contient, en plus du silicium, et dans un rapport supérieur au rapport stoechiométrique, une certaine proportion d'oxygène ou d'azote, ou à la fois d'oxygène et d'azote.

2.   Un dispositif de visualisation à cristal liquide selon la revendication 1, caractérisé en ce que le matériau amorphe consiste en oxyde de silicium, en nitrure de silicium ou en oxynitrure de silicium.

3.   Un dispositif de visualisation à cristal liquide selon la revendication 1 ou 2, caractérisé en ce que le matériau amorphe contient de l'hydrogène.

4.   Un dispositif de visualisation à cristal liquide selon l'une quelconque des revendications précédentes, caractérisé en ce que le matériau amorphe contient du phosphore ou du bore.

5.   Un dispositif de visualisation à cristal liquide selon l'une quelconque des revendications précédentes, caractérisé en ce que la couche résistive non linéaire est une pellicule qui mesure de 40 nm à 1000 nm d'épaisseur.

6.   Un dispositif de visualisation à cristal liquide selon l'une quelconque des revendications précédentes, caractérisé en ce que la couche résistive non linéaire est formée par l'une des techniques suivantes : dépôt chimique en phase vapeur par plasma, dépôt chimique en phase vapeur à basse pression, dépôt chimique en phase vapeur à la pression normale, dépôt chimique en phase vapeur de type optique ou pulvérisation cathodique.

7.   Un dispositif de visualisation à cristal liquide selon l'une quelconque des revendications précédentes, caractérisé en ce que chaque électrode de pixel, chaque électrode respective et la couche résistive non linéaire sont disposées dans un plan parallèle au plan du substrat associé.

## Patentansprüche

1. Flüssigkristall-Anzeigeanordnung mit sich gegenüberstehenden Substraten (1, 6; 60, 61; 80, 81), einer Schicht (5; 62; 82) aus Flüssigkristallmaterial zwischen den Substraten, einer Vielzahl von auf der Innenseite des einen Substrats (1; 60; 80) ausgebildeten Zeilenelektroden (4; 63; 83, 85), einer Vielzahl von auf der Innenfläche des anderen Substrates (6; 61; 81) ausgebildeten Spaltenelektroden (7; 66; 86), einer Vielzahl von Bildpunktelektroden (2; 65; 87) und einer auf wenigstens einem der Substrate (1, 6; 60, 61; 80, 81) ausgebildeten, eine elektrische Verbindung zwischen jeder Bildpunktelektrode und einer der Zeilen- oder Spaltenelektroden bildenden Schicht (3; 64; 82) mit nichtlinearem Widerstand aus amorphem Siliziummaterial, **dadurch gekennzeichnet,** daß das amorphe Siliziummaterial zusätzlich zu Silizium einen über dem stoichiometrischen Verhältnis liegenden Anteil von Sauerstoff oder Stickstoff oder von sowohl Sauerstoff als auch Stickstoff enthält.

2. Flüssigkristall-Anzeigeanordnung nach Anspruch 1, **dadurch gekennzeichnet,** daß das amorphe Material Siliziumoxid, Siliziumnitrid oder Siliziumoxid/Nitrid ist.

3. Flüssigkristall-Anzeigeanordnung nach Anspruch 1 oder 2, **dadurch gekennzeichnet,** daß das amorphe Material Wasserstoff enthält.

4. Flüssigkristall-Anzeigeanordnung nach den vorhergehenden Ansprüchen, **dadurch gekennzeichnet,** daß das amorphe Material Phosphor oder Bor enthält.

5. Flüssigkristall-Anzeigeanordnung nach den vorhergehenden Ansprüchen, **dadurch gekennzeichnet,** daß die nichtlineare Widerstandsschicht eine Dicke von 40 nm bis 1000 nm besitzt.

6. Flüssigkristall-Anzeigeanordnung nach den vorhergehenden Ansprüchen, **dadurch gekennzeichnet,** daß die nichtlineare Widerstandsschicht mittels eines chemischen Plasma-Abscheideverfahrens aus der Gasphase, durch chemische Abscheidung aus der Gasphase bei kleinem Druck, durch chemische Abscheidung aus der Gasphase bei Normaldruck, durch optische chemische Abscheidung aus der Gasphase oder durch Zerstäuben hergestellt ist.

7. Flüssigkristall-Anzeigeanordnung nach den vorhergehenden Ansprüchen, **dadurch gekennzeichnet,** daß jede Bildelektrode, jede entsprechende Elektrode und die Schicht mit nichtlinearem Widerstand in einer Ebene parallel zum zugeordneten Substrat angeordnet sind.

# FIG.1a

# FIG.1b

# FIG.2

# FIG.3a

# FIG.3b

# FIG.4a

# FIG.4b

# FIG.5a

# FIG.5b

# F I G. 6

# F I G.7

# F I G. 8

# F I G.9
## PRIOR ART

# FIG.10 PRIOR ART

# FIG.11a
## PRIOR ART

# FIG.11b
## PRIOR ART

# FIG.11c
## PRIOR ART